(19) Europäisches Patentamt

European Patent Office

Office européen des brevets

(11) **EP 0 894 357 B1**

(12) **FASCICULE DE BREVET EUROPEEN**

(45) Date de publication et mention
de la délivrance du brevet:
**30.01.2002  Bulletin 2002/05**

(51) Int Cl.⁷: **H02J 5/00**, H01F 38/14

(21) Numéro de dépôt: **97918226.8**

(86) Numéro de dépôt international:
**PCT/FR97/00669**

(22) Date de dépôt: **15.04.1997**

(87) Numéro de publication internationale:
**WO 97/39510 (23.10.1997 Gazette 1997/45)**

(54) **INSTALLATION ELECTRIQUE A INDUCTION ELECTROMAGNETIQUE**

ELEKTRISCHE VORRICHTUNG MIT ELEKTROMAGNETISCHER INDUKTION

ELECTRICAL INSTALLATION USING ELECTROMAGNETIC INDUCTION

(84) Etats contractants désignés:
**CH DE FR LI MC**

(30) Priorité: **16.04.1996  FR 9604710**

(43) Date de publication de la demande:
**03.02.1999  Bulletin 1999/05**

(73) Titulaire: **Cibie, Pierre**
**98000 Monaco (MC)**

(72) Inventeur: **Cibie, Pierre**
**98000 Monaco (MC)**

(74) Mandataire: **Dawidowicz, Armand et al**
**Cabinet Dawidowicz, 18, Boulevard Péreire**
**75017 Paris (FR)**

(56) Documents cités:
**WO-A-96/02970          DE-A- 3 824 972**
**FR-A- 2 717 614**

## Description

La présente invention concerne de manière générale une installation électrique permettant à la fois l'éclairage mais aussi le fonctionnement de tout appareil électrique tel qu'un ordinateur, un poste de télévision, etc. Plus particulièrement, l'invention concerne une installation électrique comprenant au moins un appareil électrique qui est alimenté en énergie par un champ magnétique induit et pour lequel aucune connexion par fils électriques au secteur n'est nécessaire.

Classiquement, l'éclairage des habitations ou des locaux ainsi que le fonctionnement de divers postes électriques nécessitent d'utiliser des fils électriques de liaison vers des prises de courant du secteur. Le fait d'avoir à utiliser ces fils électriques est une contrainte qui gêne les utilisateurs. En effet, les prises sont rarement placées à l'endroit optimal en nombre suffisant et une fois l'installation réalisée à l'aide de rallonges, l'utilisateur est peu enclin à la modifier, même lorsque cela serait vivement souhaitable par exemple pour éviter la multitude des fils au travers d'une pièce.

Dans le cas d'aménagement de bureaux, la plus grande souplesse doit être possible pour ce qui concerne le positionnement des divers postes électriques de travail tels qu'un poste d'ordinateur, un télécopieur, un photocopieur, etc. La conception d'un tel environnement fait souvent appel à un processus par tâtonnement et demande plusieurs essais avant d'arriver à la configuration donnant satisfaction, essais qui seraient grandement facilités si les liaisons par des fils électriques n'étaient plus nécessaires.

On connaît, par le brevet FR-B-2 717 614, une installation d'éclairage dans laquelle des dispositifs d'éclairage à lampe n'ont plus à être reliés par des fils électriques au réseau de distribution électrique ou à une source quelconque d'alimentation.

Ainsi, une installation pour éclairer un espace au moyen d'une pluralité de dispositifs d'éclairage à lampe comporte des dispositifs d'éclairage à lampe ne comprenant aucun fil électrique de liaison et étant disposés à des emplacements quelconques dans ledit espace, et comprenant des moyens pour induire un champ magnétique dans ledit espace ainsi qu'une pluralité de moyens associés respectivement auxdits dispositifs d'éclairage à lampe pour recevoir chacun ledit champ magnétique et produire localement au niveau de chacun desdits dispositifs d'éclairage à lampe une énergie électrique d'alimentation. Ainsi, lesdits moyens pour produire un champ magnétique comprennent au moins une spire de conducteur électrique disposée sur un pourtour dudit espace et parcourue par un courant alternatif tandis que chacun des moyens associés comprend une bobine composée d'une pluralité de spires entre des bornes de laquelle est induite une tension alternative servant à l'alimentation en énergie électrique du dispositif d'éclairage associé.

Cependant, dans le cas d'une alimentation d'appareils électriques autres que des dispositifs d'éclairage, cette installation se révèle insatisfaisante pour couvrir tous les besoins en courant électrique.

En effet, afin de produire une alimentation en énergie suffisante, il convient de prévoir un nombre important de spires et d'utiliser une fréquence assez élevée. Il s'ensuit que l'impédance est alors élevée et, pour une force électromotrice donnée, l'intensité produite sera faible et déphasée par rapport à la force électromotrice.

Afin de pallier cet inconvénient, l'invention propose une installation permettant l'alimentation en énergie de tous les postes électriques prévus dans un espace tel qu'un bureau, sans liaison par fil.

A cet effet, l'invention a pour objet une installation pour alimenter en énergie électrique tous les postes électriques d'un espace, lesdits postes électriques ne comprenant pas de fil électrique de liaison et étant disposés à des emplacements quelconques dans ledit espace, comprenant des moyens pour induire un champ magnétique dans ledit espace et une pluralité de moyens associés auxdits postes électriques pour recevoir chacun ledit champ magnétique et produire une énergie électrique d'alimentation, les moyens pour induire un champ magnétique comprenant au moins N spires de conducteur électrique disposées sur un pourtour dudit espace et parcourues par un courant alternatif, caractérisée en ce que des condensateurs sont placés en série dans les spires.

Selon une autre caractéristique, la capacité des condensateurs est choisie telle que l'impédance ne dépend plus que de la résistance de telle sorte que l'intensité disponible ne dépend plus que de la force électromotrice.

Avantageusement, la résistance peut être variée en faisant varier la section des conducteurs.

On observe que le champ utile ne dépend que du produit NI. Ledit produit NI permet de déterminer la section à donner au logement des câbles ainsi que le poids de cuivre nécessaire à l'installation.

A partir des coordonnées de base, à savoir l'intensité du champ magnétique et le poids de cuivre, la tension et le débit fourni par l'oscillateur sont choisis en fonction d'une optimisation économique.

Selon une caractéristique supplémentaire, chacun des moyens associés au poste électrique, ou générateur, comprend une bobine composée d'une pluralité de spires entre des bornes de laquelle est induite une tension alternative servant à l'alimentation en énergie électrique du poste électrique associé et un condensateur d'accord relié à la bobine. Le condensateur permet avantageusement d'accorder la fréquence du poste électrique par rapport à la fréquence du circuit.

De préférence, chacun desdits moyens associés comprend un noyau en fer doux magnétique ou constitué de fil de fer autour duquel est disposée ladite bobine, un condensateur d'accord étant relié à ladite bobine.

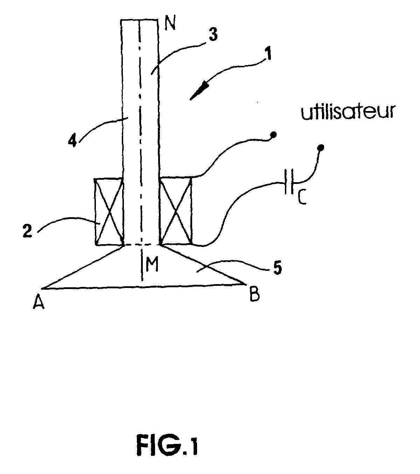

D'autres caractéristiques et avantages de l'invention apparaîtront à la lecture de la description détaillée du dessin dans lequel la figure unique représente un circuit secondaire ou générateur selon l'invention.

Une forme de réalisation préférée de l'installation d'alimentation en énergie électrique à l'induction comprend essentiellement une alimentation en courant alternatif monophasé, un circuit primaire d'induction et une pluralité de postes électriques.

Le circuit primaire d'induction comprend N spires de conducteur électrique constituant un primaire d'induction électromagnétique. Lesdites spires sont connectées en série de sorte que le courant délivré par l'alimentation parcourt les N spires les unes après les autres avant de revenir vers l'alimentation.

Ces spires sont installées sur le pourtour d'une pièce tel qu'un bureau et couvrent l'espace dans lequel fonctionnent les postes électriques.

Chaque poste électrique comprend un générateur 1 ou circuit secondaire à noyau, un appareil électrique.

De façon classique, le générateur 1 comprend essentiellement une bobine secondaire 2 disposée autour d'un noyau 3. La bobine secondaire 2 comprend une pluralité de spires en fil de cuivre, de préférence 500 spires. Le noyau 3 est constitué de préférence de fer doux magnétique feuilleté. Un condensateur d'accord C est relié à la bobine en série.

Selon une forme de réalisation de l'invention, le noyau 3 se présente sous forme d'une tige 4 dont une extrémité 5 est sensiblement de forme évasée. Ainsi la surface de la base définie entre les points A et B de la partie évasée 5 permet de conditionner la puissance délivrée par ce circuit secondaire ou générateur 1 tandis que la hauteur MN correspondant à la hauteur de la tige 4 entre la base de la partie évasée et son extrémité, est choisie suffisante pour que l'effet négatif du pôle d'aimant qui se forme à l'extrémité N de la tige 4 n'ait pas d'effet négatif.

Ainsi, dans le cas d'une alimentation d'un ordinateur, un générateur présente une surface au sol de 100 cm x 25 cm pour 150 cm de hauteur.

Le générateur 1 est soumis au champ magnétique produit par le circuit primaire et une tension E de force électromotrice est induite aux bornes de la bobine secondaire. La tension E est utilisée pour alimenter le poste électrique.

Au moins, un condensateur est placé en série dans le circuit. La valeur de la capacité de ce condensateur est choisie de telle sorte que :

$$WL - \frac{1}{WC} = 0$$

$$C = \frac{1}{W^2 L}$$

De ce fait, l'impédance répondant à la formule :

$$\sqrt{R^2 + (WL - \frac{1}{WC})^2}$$

l'impédance se réduit à la résistance R et on obtient une intensité disponible qui dépend uniquement de la force électromotrice.

Ainsi, pour une fréquence de 150 hertz, on utilise 64 spires de conducteur de cuivre d'une section de 4 cm$^2$ et pour l'espace équipé la valeur de la capacité égale 75 µf.

Le circuit secondaire ou générateur, comme le circuit primaire, doit être accordé à cette fréquence d'alimentation et le condensateur d'accord C dont la capacité est de 10 µf est alors mis en série.

Le champ magnétique est produit au niveau du sol et décroît ensuite très rapidement de sorte qu'il est négligeable à une hauteur de 50 cm au-dessus du sol, ce qui permet de respecter les normes de sécurité telles que celles de l'IRPA/INIRC.

Comme le champ magnétique produit n'est pas totalement uniforme à l'intérieur de l'espace entouré par les spires de conducteurs, on peut équiper chaque générateur d'un régulateur électronique de tension d'un type connu en soi qui permet de stabiliser la tension.

Plusieurs générateurs peuvent être en service simultanément en respectant une distance de positionnement entre eux de l'ordre d'au moins un mètre.

## Revendications

1. Installation pour alimenter en énergie électrique tous les postes électriques d'un espace, lesdits postes électriques ne comprenant pas de fil électrique de liaison et étant disposés à des emplacements quelconques dans ledit espace, comprenant des moyens pour induire un champ magnétique dans ledit espace et une pluralité de moyens associés (1) auxdits postes électriques pour recevoir chacun ledit champ magnétique et produire une énergie électrique d'alimentation, les moyens pour induire un champ magnétique comprenant au moins N spires de conducteur électrique disposées sur un pourtour dudit espace et parcourues par un courant alternatif,
**caractérisée en ce qu'** au moins un condensateur est placé en série dans les spires.

2. Installation selon la revendication 1,
**caractérisée en ce que** la capacité des condensateurs est choisie telle que l'impédance ne dépend plus que de la résistance.

3. Installation selon l'une des revendications 1 et 2,
**caractérisée en ce que** chacun des moyens (1) associés au poste électrique, ou générateur, comprend une bobine secondaire (2) composée d'une pluralité de spires entre des bornes de laquelle est induite une tension alternative servant à l'alimentation en énergie électrique du poste électrique associé et un condensateur d'accord (C) relié en série à la bobine.

4. Installation selon la revendication 3, **caractérisée en ce que** chacun desdits moyens (1) associés comprend un noyau (3) en fer doux magnétique autour duquel est disposée ladite bobine (2).

5. Installation selon la revendication 3 ou 4, **caractérisée en ce que** le noyau (3) est sous forme d'une tige (4) présentant une extrémité de forme évasée (5).

6. Installation selon l'une des revendications 1 à 5, **caractérisée en ce que** les moyens pour produire un champ magnétique comprennent une alimentation en courant alternatif pour produire ledit courant alternatif dans lesdites N spires de conducteur électrique disposées sur le pourtour dudit espace.

7. Installation selon la revendication 6, **caractérisée en ce que** ledit courant alternatif a une fréquence de 150 Hz, le nombre N de spires étant alors égale à 64, et la capacité est de 75 µf.

**Patentansprüche**

1. Einrichtung zum Speisen sämtlicher elektrischer Anschlußstellen eines Raumes mit elektrischer Energie, wobei die genannten elektrischen Anschlußstellen keine elektrischen Verbindungsdrähte aufweisen und an beliebigen Stellen in dem Raum angeordnet sind, mit Mitteln zum Induzieren eines magnetischen Feldes in dem Raum und mit einer Mehrzahl von mit den Anschlußstellen verbundenen (1) Mitteln zum Empfangen jeweils eines elektrischen Feldes und zum Erzeugen einer elektrischen Speiseenergie, wobei die Mittel zum Induzieren eines magnetischen Feldes wenigstens N Windungen eines elektrischen Leiters aufweisen, die an einem Umfang des Raumes angeordnet und mit einem Wechselstrom gespeist sind, **dadurch gekennzeichnet, daß** wenigstens ein Kondensator in Reihe in den Windungen angeordnet ist.

2. Einrichtung nach Anspruch 1, **dadurch gekennzeichnet, daß** die Kapazität der Kondensatoren derart gewählt ist, daß die Impedanz nicht mehr von dem Widerstand abhängt.

3. Einrichtung nach einem der Ansprüche 1 und 2, **da-**

**durch gekennzeichnet, daß** jedes der mit der elektrischen Anschlußstelle oder dem Generator verbundenen Mittel eine Sekundärwicklung (2) aufweist, die aus einer Mehrzahl von Windungen besteht, zwischen deren Anschlußklemmen eine elektrische Wechselspannung induziert ist, die zur Speisung der zugeordneten Anschlußstelle mit elektrischer Energie dient, und daß ein Abstimmkondensator (C) in Reihe zu der Spule geschaltet ist.

4. Einrichtung nach Anspruch 3, **dadurch gekennzeichnet, daß** jedes der genannten verbundenen Mittel (1) einen magnetischen Weicheisenkern (3) aufweist, um den herum die Spule (2) angeordnet ist.

5. Einrichtung nach Anspruch 3 oder 4, **dadurch gekennzeichnet, daß** der Kern (3) die Form einer Stange hat, deren eines Ende konisch erweitert (5) ist.

6. Einrichtung nach einem der Ansprüche 1 bis 5, **dadurch gekennzeichnet, daß** die Mittel zum Erzeugen eines magnetischen Feldes eine Wechselstromspeisung umfassen zum Erzeugen des Wechselstromes in den N Windungen des elektrischen Leiters, die an dem Umfang des genannten Raumes angeordnet sind.

7. Einrichtung nach Anspruch 6, **dadurch gekennzeichnet, daß** der Wechselstrom eine Frequenz von 150 Hertz hat, die Anzahl N der Windungen dann gleich 64 und die Kapazität gleich 745 µf ist.

**Claims**

1. Installation for supplying all of the electrical points of an area with electrical power, said electrical points not comprising any connecting electrical wire and being disposed at any locations in said area, said installation comprising means for inducing a magnetic field in said area and a plurality of means (1), associated with said electrical points, to each receive said magnetic field and to produce an electrical power supply, the means for inducing a magnetic field comprising at least N electrically conductive windings, which are disposed on a periphery of said area and are supplied with an alternating current, **characterised in that** at least one condenser is placed in series in the windings.

2. Installation according to claim 1, **characterised in that** the capacity of the condensers is selected in such a manner that the impedance no longer depends only on the resistance.

3. Installation according to one of claims 1 and 2, **characterised in that** each of the means (1) associated with the electrical point, or generator, comprises a secondary coil (2) made up of a plurality of windings, between the terminals of which coil an alternating voltage is induced which serves to supply electrical power to the associated electrical point, and a tuning condenser (C) connected in series to the coil.

4.   Installation according to claim 3, **characterised in that** each of said associated means (1) comprises a core (3) formed from soft magnetic iron, around which is disposed said coil (2).

5.   Installation according to claim 3 or 4, **characterised in that** the core (3) is in the form of a bar (4) which has an end (5) with a splayed-out configuration.

6.   Installation according to one of claims 1 to 5, **characterised in that** the means for producing a magnetic field comprise an alternating current supply to produce said alternating current in said N electrically conductive windings disposed on the periphery of said area.

7.   Installation according to claim 6, **characterised in that** said alternating current has a frequency of 150 Hz, the number N of windings then being equal to 64, and the capacity is 75 µf.

utilisateur

**FIG.1**